Europäisches Patentamt

European Patent Office

Office européen des brevets

(11) Veröffentlichungsnummer: **0 274 036**
A1

# (12) EUROPÄISCHE PATENTANMELDUNG

(21) Anmeldenummer: 87117203.7

(22) Anmeldetag: 21.11.87

(51) Int. Cl.⁴: **H02P 5/178** , G05D 13/62

(30) Priorität: 04.12.86 CH 4847/86

(43) Veröffentlichungstag der Anmeldung:
13.07.88 Patentblatt 88/28

(84) Benannte Vertragsstaaten:
CH DE FR GB IT LI SE

(71) Anmelder: **KONTRON-HOLDING AG**
**Bernerstrasse Süd 169**
**CH-8010 Zürich(CH)**

(72) Erfinder: **Grassi, Alfred**
**71 Reidholzstrasse**
**CH-8805 Richterswil(CH)**
Erfinder: **Knorr, Erhard**
**3 Am Anger**
**D-6908 Wiesloch(DE)**

(74) Vertreter: **Buntz, Gerhard et al**
**Grenzacherstrasse 124 Postfach 3255**
**CH-4002 Basel(CH)**

(54) **Motorsteuerung.**

(57) Bei einem Nebenschluss-Gleichstrom-Motor für
den Antrieb von Zentrifugen wird im unteren Drehzahlbereich zur Erzielung einer sanften Beschleunigung der Ankerstrom bei voller Felderregung und zur Erzielung einer sanften Abbremsung
der Feldstrom bei vollem Ankerstrom nach einem
vorgegebenen Rampensignal mit definierter, einstellbarer Steilheit geregelt.

Fig.1

## Motorsteuerung

Die Erfindung betrifft ein Verfahren zur Steuerung eines Nebenschluss-Gleichstrom-Motors und eine Einrichtung zur Durchführung dieses Verfahrens.

Nebenschluss-Gleichstrommotoren werden u.a. bevorzugt zum Antrieb von Zentrifugen und Ultrazentrifugen eingesetzt. Zentrifugen und Ultrazentrifugen dienen im allgemeinen zur Trennung von Probensubstanzen in einem flüssigen Medium. Unter bestimmten Bedingungen, vor allem bei einfachen Trennungen von zwei Substanzen, ist sowohl die Beschleunigungs-als auch die Bremsrate von untergeordneter Bedeu-tung. Jedoch bei Anwendungen mit Zonal-, Ausschwing-oder Vertikal-Rotoren bei Verwendung von Dichtegradienten ist eine besonders weiche Beschleunigung bzw. Abbremsung von grosser Bedeutung, speziell bei Geschwindigkeiten zwischen 0 und etwa 1 200 U/min. Beim Beschleunigen ist erst nach dieser Anlaufphase der Dichtegradient durch die erzeugte Zentrifugalkraft stabil genug, so dass der den Rotor mit voller Beschleunigung zur Enddrehzahl gebracht werden kann. Auf die sanfte Anlaufbeschleunigung kann verzichtet werden, wenn selbstformendes Gradientenmaterial genommen wird. Jedoch ist in allen Fällen eine sanfte Abbremsung unbedingt erforderlich, um unerwünschte Vermischungseffekte, die bei maximaler Abbremsung bis zum Stillstand auftreten würden, zu vermeiden.

Bekannte Zentrifugenantriebsmotoren haben in der Regel eine fest eingestellte Beschleunigung und eine zuschaltbare bremsfunktion mit fester Bremswirkung. Daraus folgt, dass die Anlauf-bzw. Bremsrate von der Rotormasse abhängig ist. Ferner ist bei Verwendung von nicht geeichtung Reglern die Reproduzierbarkeit schlecht. Keine der bekannten Zentrifugen gestattet es, die Abbremsrampe unabhängig von der Rotormasse reproduzierbar zu regeln. Darüber hinaus gibt es keine Regelung der Bremsrate, die eine Bereich unter und gleichzeitig auch über dem freien Auslauf gestatte. Die Verwendung von leichten und hochfesten Materialien bei der Herstellung der Rotoren - schliesst daher die Eignung für diese Anwendungstechnik der Dichtegradienten-Zentrifugation aus.

Der Erfindung liegt die Aufgabe zugrunde, eine Motorsteuerung zur Verfügung zu stellen, die die vorstehenden Nachteile nicht aufweist.

Erfindungsgemäss wird dies dadurch erreicht, dass beim Anfahren der Ankerstrom bei voller Felderregung und beim Bremsen der Feldstrom bei vollem Ankerstrom nach einem vorgegebenen Rampensignal mit definierter einstellbarer Steilheit geregelt wird.

Im folgenden wird anhand der beiliegenden Zeichnungen ein Ausführungsbeispiel der Erfindung beschrieben. Es zeigen:

Fig. 1 ein Blockdiagramm einer Steuerung nach der Erfindung.

Fig. 2 ein Diagramm der Rotorgeschwindigkeit mit verschiedenen Anlauf-und Bremsraten.

Fig. 3 ein Schaltplan eines Details der Steuerung.

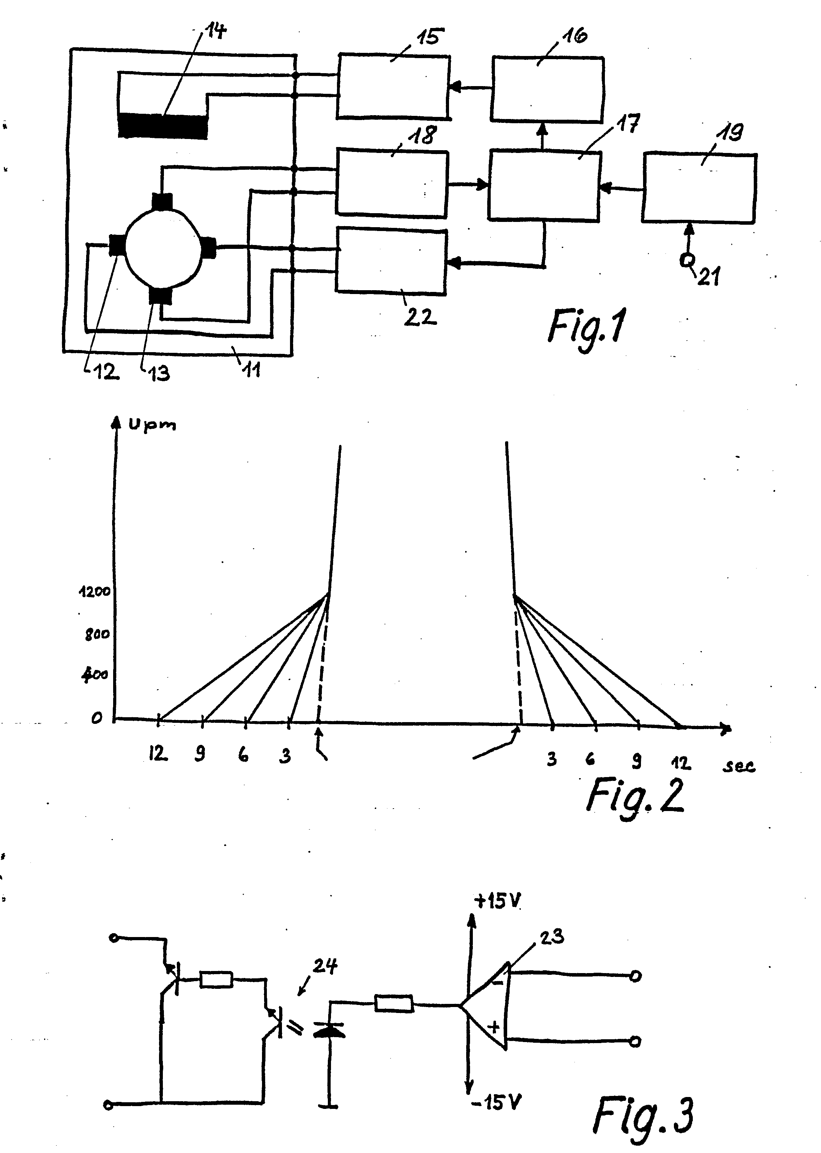

Mit der erfindungsgemässen Steuerung lässt sich im unteren Drehzahlbereich eine Geschwindigkeitsregelung mit Feldstromänderungen erreichen. Die in Fig. 1 gezeigte Schaltung erlaubt es Beschleunigungs-bzw. Abbremsrampen zu bilden, die auch die strengsten Forderungen in Bezug auf Dichtegradienten-Zentrifugation erfüllen. Fig. 2 zeigt die absolute Symmetrie der Beschleunigungs-Abbremszeiten, die sich dadurch erreichen lassen.

In Fig. 1 ist ein Nebenschluss-Gleichstrommotor 11 sehr schematisch dargestellt. Er besitzt Ankerwicklungen 12 und Tachometerwicklungen 13 zur Abnahme eines Drehzahlsignals. Ausserdem ist eine Wicklung 14 stellvertretend für Feldwicklungen gezeigt. Ein derartigen Motor besitzt auch Hilfswicklungen, die mit den Ankerwicklungen 12 in Serie geschaltet sind, die aber hier nicht gezeigt sind.

Die Feldwicklungen oder -spulen 14 sind über einen Umschalter 15, der zur Umpolung des Feldstroms während des Bremsvorganges dient, mit einer Feldstrom-Steuereinheit 16 verbunden, die den Feldstrom liefert. In entsprechender Weise sind die Ankerwicklungen 12 mit einer Ankerstrom-Steuereinheit 22 verbunden. Beide Steuereinheiten 16 und 22 leifern je nach Bedarf für die volle Beschleunigung bzw. Bremsung und die aufrechterhaltung der maximalen Drehzahl eine konstanten maximalen Strom oder für eine flacheren Anlauf oder Bremsverlauf einen entsprechend geregelten niedrigeren Strom. Zu diesem Zweck sind beide Steuereinheiten 16 und 22 mit einer Regeleinheit 17 verbunden. Ein Signaleingang dieser Regeleinheit 17 ist mit einem Drehzahlmesser 18 verbunden, der seinerseits mit den Tachometerwicklungen 13 in Verbindung steht. Der Drehzahlmesser 18 erzeugt aus dem von den Tachometerwicklungen 13 gewonnenen Signal ein Drehzahlsignal, das der Regeleinheit als Ist-Signal zugeführt wird.

Ein zweiter Eingang der Regeleinheit 17 ist mit eihem Sollwertgenerator 19 verbunden. Bei diesem Sollwertgenerator 19 handelt es sich im vorleigenden Ausführungsbeispiel um einen Mikroprozessor, der aufgrund von Daten über die gewünschte Dauer des Anlauf-bzw. Bremsvorganges, die über eine manuelle Eingabe 21 eingegeben werden, ein Rampensignal erzeugt, das als Sollwert der Regeleinheit 17 zugeführt wird. Die Regeleinheit 17 nimmt einen Soll/Ist Vergleich vor und gibt entsprechende Regelsignale an die beiden Steuereinheiten 16 und 22 ab.

Die Regeleinheit ist in Fig. 3 in ausführlicher Darstellung gezeigt. Die Ist-und Sollsignale liegen in Form von Spannungen an den jeweiligen Eingängen der Regeleinheit an. Die Spannungen werden einer Vergleichsschaltung 23 eingegeben, die an ihrem Ausgang ein Differeinzsignal liefert. Dieses Differenzsignal wird über einen Optokoppler 24 auf die Leistungsseite übertragen und beispeilsweise der Feldsteuerung zugeführt.

Die Wirkungsweise der Steuerung ist wie folgt: Für die Beschleunigungsphase sind die Feldspulen direkt mit der Versorgungsspannung verbunden. Die manuell vorgewählte Beschleunigungsrate wird durch den Mikroprozessor (19) der Regeleinheit zugeführt. Der Sollwert stellt eine rampenförmig von 0 auf 0,6 V ansteigende Spannung dar. Der Wert von 0,6 Volt entspricht einer Drehzahl von 1200 Upm. Diese Drehzahl wurde empirisch als ungefährer Grenzwert ermittelt, oberhalb dessen die Zonentrennflächen so stabil sind, dass unabhängig von der Brems-oder Beschleunigungsrate keine Durchmischung mehr stattfindet.

Nach dem Erreichen der Drehzahl von 1200 Upm wird das Sollsignal auf 12 V geschaltet, so dass der Motor in der kürzestmöglichen Zeit bis zum Erreichen der Höchstdrehzahl beschleunigt.

Ist die vorgegebene Zentrifugationszeit abgelaufen oder wird der Lauf sonstwie unterbrochen, erscheint ein Stopsignal, das folgendes bewirkt: Das Feld wird umgepolt, ein Widerstand wird in Reihe mit dem Motoranker geschaltet und der Sollwerteingang der Motorsteuerung wird mit +12 V verbunden. Dies hat zur Folge, dass der Motor mit demselben Strom abbremst wie er beschleunigt. Die Sollwertvorgabe des Mikro-Prozessors wird durch das Stopsignal auf 1,200 U/min. = 0,6 V abgesenkt. Solange die Istdrehzahl höher als 1,200 U/min. ist, steht am Ausgang des Komparators 23 ein positives Signal, das von der Feldstromsteuerung 16 den vollen Feldstrom in den Feldwicklungen fliessen lässt. Hat die Drehzahl 1,200 U/min. erreicht, dann wird die in Fig. 2 gezeigte Abbremsrampe gestartet.

Durch Soll/Istabgleich im Komparator 23 führt dazu, dass das Feld entsprechend der Rampenvorgabe verstärkt oder geschwächt wird. Da bei abgeschaltetem Feldstrom der Motor wegen der erwähnten Hilfswicklungen beschleunigt, ist also für die Regelung mit dem umgepolten Feldstrom der ganze Bereich von maximaler Bremsung bis zu - schwacher Beschleunigung gegeben. Dementsprechend sind Abbremszeiten möglich, die je nach dem verwendeten Rotor länger oder kürzer dauern als der freie Auslauf.

## Ansprüche

1. Verfahren zur Steuerung eines Nebeschluss-Gleichstrommotors, insbesondere für den Antrieb von Zentrifugen, dadurch gekennzeichnet, dass beim Anfahren der Ankerstrom bei voller Felderregung und beim Bremsen der Feldstrom bei vollem Ankerstrom nach einem vorgegebenen Rampensignal mit definierter, einstellbarer Steilheit geregelt wird.

2. Steuerungsverfahren nach Anspruch 1, dadurch gekennzeichnet, dass die Regelung des Ankerstroms und des Feldstroms nur während eines begrenzten Drehzahlbereichs vorgenommen wird.

3. Steuerungsverfahren nach Anspruch 1, dadurch gekennzeichnet, dass der Drehzahlbereich etwa zwischen 0 und 1200 Upm liegt.

4. Vorrichtung zur Durchführung des Steuerungsverfahrens nach Anspruch 1, gekennzeichnet durch mit den jeweiligen Wicklungen verbundene Feldstrom-und eine Ankerstrom-Steuerungseinheiten (16,22), eine Regeleinheit (17) zur Abgabe eines Regelsignals an die Steuerungseinheiten, einen Sollwertgenerator (16) zur Vorwahl und Abgabe eines Beschleunigungs-und Bremsratensollwerts an die Regeleinheit und einen Drehzahlmesser (13,18) zur Ermittlung eines Istwerts der Drehzahl und Abgabe desselben an die Regeleinheit.

**Fig.1**

**Fig.2**

**Fig.3**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | DE-A-2 824 045 (HERAEUS-CHRIST GmbH) * Insgesamt * --- | 1-3 | H 02 P 5/178 G 05 D 13/62 |
| Y | US-A-4 244 513 (E. FAYER et al.) * Figur 5 mit zugehöriger Beschreibung * --- | 1-3 | |
| A | DE-A-2 301 935 (ALLMÄNNA SVENSKA ELEKTRISKA AB) * Insgesamt * --- | 4 | |
| A | IBM TECHNICAL DISCLOSURE BULLETIN, Band 28, Nr. 4, September 1985, Seiten 1561-1562, New York, US; "DC motor acceleration control" ----- | | |

**RECHERCHIERTE SACHGEBIETE (Int. Cl.4)**

H 02 P
B 04 B
G 05 D

Der vorliegende Recherchenbericht wurde für alle Patentansprüche erstellt

| Recherchenort | Abschlußdatum der Recherche | Prüfer |
|---|---|---|
| DEN HAAG | 19-02-1988 | BEYER F. |